# EUROPÄISCHE PATENTSCHRIFT

(11) **EP 0 901 442 B1**
(45) Veröffentlichungstag und Bekanntmachung des Hinweises auf die Patenterteilung: **16.08.2000**
(21) Anmeldenummer: 96915981.3
(22) Anmeldetag: 28.05.1996
(51) Int. Cl.: B61D 17/04, B62D 27/02, C09J 5/04

(54) **VERFAHREN ZUM FÜGEN VON BAUTEILEN UND BAUGRUPPEN VON SCHIENENFAHRZEUGEN DURCH KLEBEN**
METHOD OF JOINING RAIL VEHICLE COMPONENTS AND SUBASSEMBLIES BY ADHESION
PROCEDE D'ASSEMBLAGE D'ELEMENTS CONSTITUTIFS ET DE SOUS-GROUPES DE VEHICULES SUR RAILS PAR COLLAGE

(43) Veröffentlichungstag der Anmeldung: 17.03.1999
(73) Patentinhaber: DaimlerChrysler AG, 70567 Stuttgart (DE)
(72) Erfinder: SCHÄHL, Wolfgang, D-16761 Hennigsdorf (DE); WEICHELT, Peter, D-14621 Schönwalde (DE)
(74) Vertreter: Lindner-Vogt, Karin, Dipl.-Phys.
(86) Internationale Anmeldenummer: DE9601004
(87) Internationale Veröffentlichungsnummer: WO9745308

(56) Entgegenhaltungen:
- DE-A- 1 755 319
- DE-A- 4 431 991
- DE-A- 19 501 805

## Beschreibung

Die Erfindung bezieht sich auf ein Verfahren zum Fügen von Bauteilen und Baugruppen von Schienenfahrzeugen mittels Kleben.

Bei der Fertigung von Schienenfahrzeugen wird zunehmend versucht, komplexe Spannungen übertragende kraft- bzw. formschlüssige Schweiß-, Niet- oder Schraubverbindungen durch gleichwertige Klebverbindungen zu ersetzen. Es ist bekannt, daß geklebte Baugruppen schienenfahrzeugspezifische Dauerfestigkeitseigenschaften mit Ein- oder Zweikomponenten-Polyurethanklebstoffen erreichen können. Ein wesentlicher Nachteil bei der Anwendung derartiger Klebstoffe besteht darin, daß sie eine bestimmte Fugendicke erfordern sowie definierte Aushärtezeiten benötigen, bevor sie eine die Handhabung, den Transport und die Weiterbearbeitung der gefügten Baugruppen gestattende Festigkeit erreichen, so daß lange Fixierzeiten unter Aufrechterhaltung eines definierten Fügedrucks eingehalten werden müssen. Sehr kurze Fixierzeiten ermöglichende Klebstoffe wie Acrylatklebstoffe sind dagegen häufig nicht alterungsbeständig und können keine gleichartigen Dauerfestigkeitseigenschaften sichern.

Zur Verkürzung technologischer Fixierzeiten wird in der DE 35 25 830 A1 vorgeschlagen, dünnwandige Karosserieteile durch Kleben zu fügen, indem ein länger aushärtender und dauerhaft tragender Hauptkleber (z.B. ein bandartiger Strang eines Zweikomponentenklebstoffs) auf einem der Elemente aufgebracht wird, dann die zu fügenden Elemente zusammengebracht und unter Druck gefügt werden und anschließend in zum Hauptkleber benachbarte Klebfugenbereiche ein Schnellkleber (z.B. ein schnell härtender Einkomponentenklebstoff auf der Basis von Zyanacryl) unter Fügedruck zwischen die Elemente appliziert wird, wobei der Schnellkleber schon nach relativ kurzer Zeit die Funktion der bisherigen Klebevorrichtung übernehmen kann. Um die erforderlichen Klebfugendicken einhalten zu können, sind die zu fügenden Bauelemente im Klebfugenbereich mulden- oder rinnenartig ausgeformt. Im ersten Ausführungsbeispiel wird der Schnellkleber durch Öffnungen in einem der Bauteile zwischen die Bauteile injiziert. Die für das Applizieren des Schnellklebers und Aufbringen des erforderlichen Fügedrucks vorgesehene Vorrichtung ist kompliziert, im beschriebenen Anwendungsfall ist eine Vorrichtung je Applikationsstelle oder eine Folgepositionierung der Elemente erforderlich. Im zweiten Anwendungsfall wird der Schnellkleber mittels Glasampullen oder Folienbeuteln, die beim Fügevorgang zerstört werden, z.B. in Mulden des einen Elements appliziert. Für Anwendungsfälle, in denen Bauteile mit Fertigungstoleranzen zueinander ohne besonders ausgeformte Klebfugen mit definierten Schichtdicken gefügt werden sollen, ist dieses Verfahren nicht anwendbar. Eine dekorative Oberfläche erhält eine derartige Baugruppe nur durch nachträglichen Oberflächenausgleich und Oberflächenbeschichtung.

Um bestimmte Klebfugendicken einzuhalten, sieht das in der EP 0 433 513 A1 beschriebene Klebverfahren kalibrierte Begrenzungs- und Distanzelemente im Randbereich oder innerhalb der Klebfuge vor.

In der DD 241 768 A1 werden definierte Punkte oder Bereiche der Klebfuge mit Materialerhebungen oder stoffschlüssigen Materialauftragungen versehen.

Müssen Teile mit Fertigungstoleranzen zueinander gefügt werden, versagen die beiden letztgenannten Methoden, zudem können derartige die Klebfuge unterbrechende Einschlüsse bzw. die zu fügenden Bauteile starr beabstandende Mittel bei gegebener Klebfläche die mit dem jeweiligen Klebstoff theoretisch erreichbare Fügefestigkeit mindern oder dazu zwingen, unter Umständen weit größere Fügeflächen als theoretisch erforderlich vorzusehen.

Außerdem entsteht bei der Verwendung von Klebstoffen häufig das Problem, daß über den als Fügefläche vorgesehenen Oberflächenbereich hinaus ausgetretene Klebstoffreste nur mit hohem mechanischen oder chemischen Aufwand, der zur Schädigung des Bauteils führen kann, wieder zu entfernen sind. Üblicherweise werden deshalb z.B. Klebstreifen als Randbegrenzung der Fügeflächen verwendet, die nachträglich wieder von der Oberfläche abgelöst werden können. Ihr Aufbringen und nachträgliches Entfernen erfordert hohen Aufwand; in der Regel müssen sie als Sondermüll entsorgt werden.

Der Erfindung liegt das Problem zugrunde, ein neues Verfahren zum Fügen von Baugruppen von Schienenfahrzeugen mittels Kleben zu schaffen, bei dem die Anwendung eines Dauerfestigkeit gebenden Klebers, der relativ langer Aushärtezeiten bedarf, kombiniert wird mit der Anwendung eines schnell Handhabungsfestigkeit gebenden Klebers, wobei komplizierte Formgestaltung der Klebfugen sowie hoher Vorrichtungsaufwand vermieden, Fertigungstoleranzen zwischen den zu fügenden Bauteilen ausgeglichen und definierte Mindestklebfugendicken zwischen den Bauteilen eingehalten werden sollen, ohne daß es zu festigkeitsmindernden Störungen innerhalb der Klebfuge kommt. Die Erfindung ist weiterhin auf das Problem gerichtet, die Benetzung von Bauteilflächen mit Klebstoff auf ausgewählte Fügeflächen begrenzen zu können und dabei das nachträgliche Entfernen einer abdeckenden Randbegrenzung und deren Entsorgung als Sondermüll zu vermeiden.

Diese Aufgaben werden gemäß der Erfindung gelöst durch die in den **Ansprüchen 1.** und **2.** sowie **3.** genannten Verfahrensmerkmale. Vorteilhafte Ausgestaltungen der Erfindung sind in den **Ansprüchen 4.** bis **10.** dargestellt, für die Schutz in Verbindung mit den **Ansprüchen 1.** bis **3.** gesucht wird.

Mit der Erfindung werden in Bezug auf den bisherigen Stand der Technik folgende vorteilhafte Wirkungen erzielt:
- Im Vergleich zu bisherigen Klebverfahren wurde ein Weg gefunden, Baugruppen von Schienenfahrzeugen durch Kleben mittels längerhärtender Ein- oder Zweikomponenten-Polyurethanklebstoffe herzustellen, bei denen die technologischen Wartezeiten bis zur weiteren Handhabung deutlich verkürzt und der dafür erforderliche technologische Flächen- und gegebenenfalls Vorrichtungsbedarf wesentlich verringert werden: Durch die schnellklebfähigen ersten Klebstoffschichten werden die zu fügenden Bauteile beim Fügen dauerhaft in der gewünschten Lage zueinander fixiert und eine solche erste Fügefestigkeit erreicht, daß eine sofortige weitere Handhabung der Baugruppe möglich ist und verwendete Fügevorrichtungen sowie Fertigungsflächen für weitere Baugruppen freiwerden. Die Eigenschaft des erfindungsgemäß verwendeten ersten Klebstoffs, beim Fügen eine definierte Fügeschichtdicke beizubehalten, läßt diesen ersten Klebstoff gleichzeitig als Abstandshalter wirken. Dadurch, daß er in definierter Schichtdicke nur auf ausgewählten ersten Fügeflächen aufgebracht wird, können im Gegensatz zur Herstellung derartiger Baugruppen mittels Schweißen ohne Schwierigkeiten größere fertigungsbedingte Toleranzen zwischen den zu fügenden Bauteilen durch eine variable Dicke der zweiten Klebschicht ausgeglichen und Abweichungen von der Sollform der Baugruppe vermieden werden. Gleichzeitig wird das Risiko örtlicher Unterschreitungen der für eine optimale Festigkeit erforderlichen Mindestschichtdicke des zweiten Klebstoffs oder von durch unzureichende Annäherung der Bauteile unvollständig gefüllten Klebfugen stark reduziert. Dieses Risiko kann völlig ausgeschlossen werden, wenn die Formabweichungen der Fügepartner vor dem Fügen ausgemessen werden und entsprechend dem Meßergebnis die Position und/oder Schichtdicke des ersten Klebstoffs gewählt wird.
- Durch dieses Verfahren und bei Verwendung der im Ausführungsbeispiel angegebenen Klebstoffe sind im Schienenfahrzeugbau Klebverbindungen hocheffektiv herstellbar, bei denen hohe Reißdehnung und Steifigkeit mit großer Schadenstoleranz und schienenfahrzeugspezifischer Dauerfestigkeit gepaart ist und die bisherigen komplexe Spannungen übertragenden kraft- bzw. formschlüssigen Verbindungen gleichwertig sind, wie sie beispielsweise für Seitenwand-, Stirnwand- und Dachsekfionen in Differentialbauweise für Wagenkästen von Schienenfahrzeugen erforderlich sind, bisher jedoch nur mittels Schweißen, Nieten oder Schrauben wirtschaftlich hergestellt werden konnten.
- Gegenüber dem Fügen mittels Schweißen sind durch das erfindungsgemäße Klebeverfahren in einer Reihe von Anwendungsfällen Verkürzungen der Fügezeit erreichbar.

Mittels dieses Klebeverfahrens können Bauteile aus unterschiedlichen Materialien zu Baugruppen für Wagenkästen von Schienenfahrzeugen gefügt werden, wobei durch geeignete Klebstoffwahl unterschiedliches physikalisches Verhalten (z.B. Wärmedehnung, Elastizität) der gefügten Bauteile kompensiert werden kann.
- Im Vergleich zum bisherigen Schweißen derartiger Baugruppen treten beim Kleben nach dem beschriebenen Verfahren keine Formabweichungen durch Schweißspannungen auf, hohen Aufwand erfordernde thermische Richtarbeiten entfallen.
- Das Fügen mittels Kleben führt im Gegensatz zu den üblichen Schweiß-, Niet- oder Schraubverbindungen in der Regel zu keiner visuellen Veränderung auf den den Fügeflächen abgewandten Bauteil- oder Baugruppenoberflächen.
- Gegenüber geschweißten Baugruppen sind bei derart hergestellten Klebverbindungen nachträgliche Korrosionsschutzmaßnahmen sehr viel sicherer ausführbar.
- Die Anwendung dieses Klebeverfahrens bei Schienenfahrzeugen schafft die Möglichkeit, Baugruppen aus Bauteilen herzustellen, die als Vormaterial oder in der Vorfertigung bereits eine besondere Oberflächengestaltung (z.B. Korrosionsschutz durch Verzinkung, eine dekorative Plastfolienkaschierung oder einen besonderen Schutz für die Arbeitsschritte der Weiterbearbeitung, z.B. eine die fertigbearbeitete Oberfläche eines Außenwandblechs abdeckende Schutzfolie) erhielten. Ebenso sind Baugruppen herstellbar, in denen z.B. Maßnahmen der Schall- und Wärmedämmung vollständig (und nicht, wie beim Fügen mittels Schweißen, unter Aussparung und eventueller aufwendiger Nachbearbeitung der thermisch belasteten Bereiche) bereits in der Vorfertigung realisiert werden. Damit ermöglicht das beschriebene Verfahren die Herstellung funktionell höherwertiger Baugruppen in Verbindung mit einem höheren Vorfertigungsgrad, der Aufwand und Kosten spart.
- Die Anwendung dieses Klebverfahrens erhöht gegenüber üblichen Schweiß-, Niet- oder Schraubverbindungen die Designfreiheit für die Formgebung der Wagenkästen wesentlich.
- Da die mit dem erfindungsgemäßen Verfahren zu fügenden Bauteile gegenüber üblichen Schweiß-, Niet- oder Schraubverbindungen konstruktiv anders gestaltet werden können, sind bei gleicher Funktion und Festigkeit Masseeinsparungen an Bauteilen und Baugruppen erreichbar.

Klebverbindungen der beschriebenen Art dämpfen je nach verwendetem Klebstoff das Entstehen und vor allem die Weiterleitung des Körperschalls.

Ein Ausführungsbeispiel der Erfindung ist das Fügen einer in Differentialbauweise ausgeführten Seitenwandsektion eines Wagenkastens für ein Schienenfahrzeug, das nachstehend anhand der Zeichnungen veranschaulicht und beschrieben ist. Es zeigt:
- **Figur 1**: die Teilansicht einer Seitenwandsektion im Fügebereich einer Seitenwandblechsektion mit einer Profilsektion,
- **Figur 2**: eine Teilansicht einer Seitenwandblechsektion gemäß **Figur 1** mit aufgebrachten Klebstoffen vor dem Fügen,
- **Figur 3**: einen Querschnitt durch eine Klebfuge der Seitenwandsektion gemäß **Figur 1** und
- **Figur 4**: einen Schnitt durch eine Seitenwandsektion im Fügebereich einer Seitenwandblechsektion mit einer Beulsteife

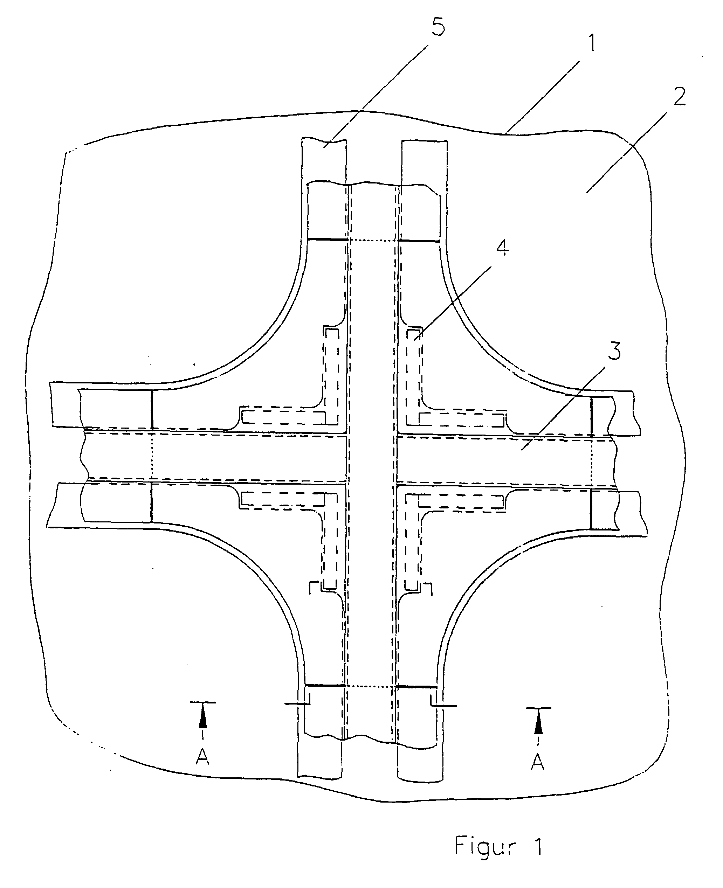

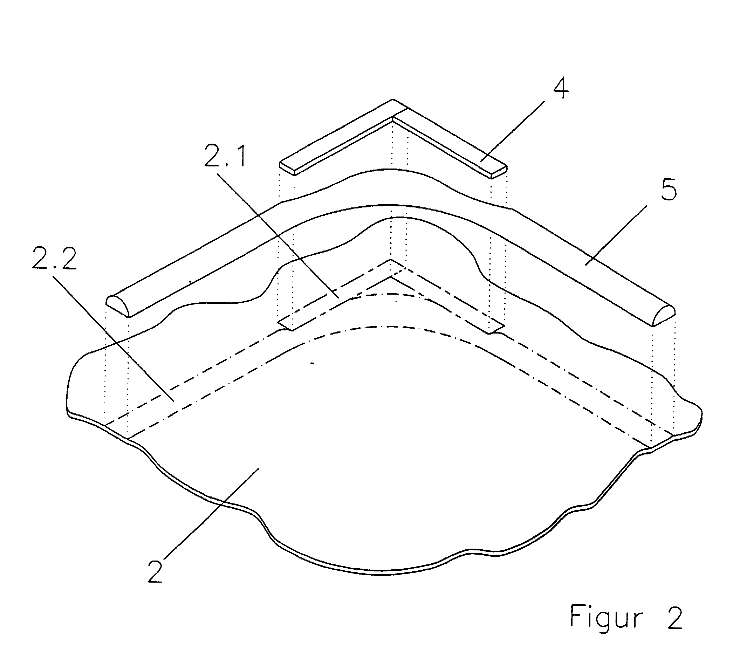

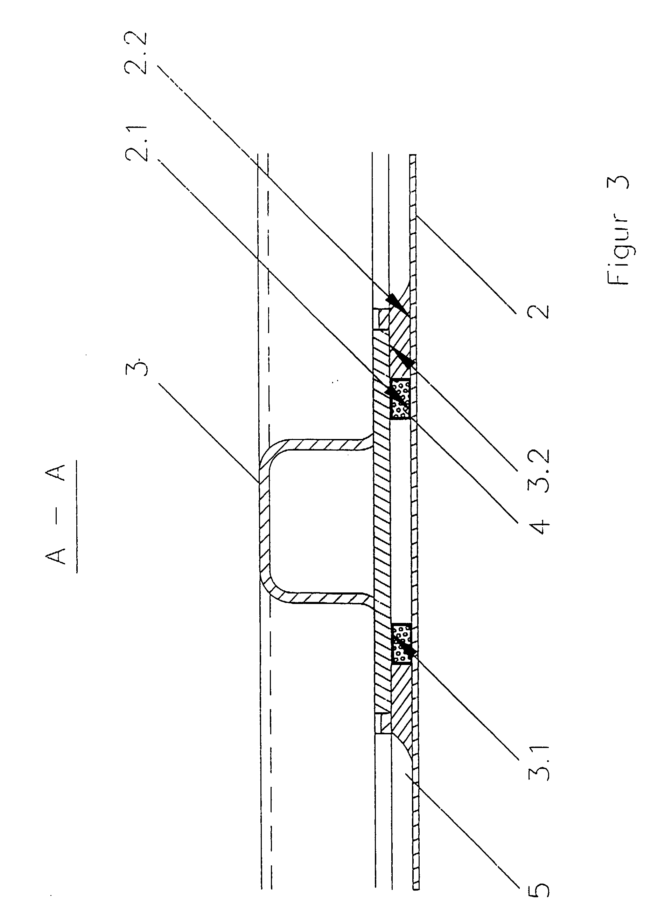

Im Ausführungsbeispiel wird beim Fügen der Seitenwandsektion **1** gemäß **Anspruch 1.** wie folgt verfahren: Eine vorgefertigte Seitenwandblechsektion **2** wird - falls notwendig, mittels einer speziellen Vorrichtung - in eine Fügelage gebracht und in der gewünschten Gebrauchsform fixiert. Die für das Kleben vorgesehenen ersten und zweiten Fügeflächen **2.1** und **2.2** der Seitenwandblechsektion **2** sowie **3.1** und **3.2** einer zugehörigen formangepaßten Profilsektion **3**, die im Beispiel aus Profilen mit hutförmigem Querschnitt und verstärkenden Knotenblechen durch Schweißen gefügt ist, werden gemäß den Anwendungsvorschriften der Klebstoffhersteller vorbehandelt. Wie in **Figur 2** gezeigt ist, wird auf die markierten ersten Fügeflächen **2.1** der Seitenwandblechsektion **2** je ein Stück eines zweiseitig kontaktklebfähigen Klebstoffkörpers **4** aus einem geschlossenzelligen Acrylat-Klebstoffband hoher Haftkraft mit einer Dicke von z.B. 2 mm unter kurzzeitigem Kontaktdruck mit der Seitenwandblechsektion **2** flächig aufgeklebt, wobei die von der Fügefläche **2.1** abgewandte Klebfläche des Klebstoffkörpers **4** noch durch die vom Klebstoffhersteller vorgesehene Schutzfolie abgedeckt bleibt. Daran anschließend wird, wie ebenfalls in **Figur 2** dargestellt ist, auf die markierten zweiten Fügeflächen **2.2** der Seitenwandblechsektion **2** als zweite Klebschicht **5** mit Hilfe eines üblichen Dosier-, Misch- und Auftraggerätes ein verlaufsträger, jedoch fließfähiger kalthärtender, im ausgehärteten Zustand zähharter Zweikomponenten-Polyurethan-Klebstoff in einer Menge und Schichtdicke aufgetragen, die in jedem Fall ein Benetzen der Gegenfläche **3.2** und ein Ausfüllen der Klebfuge in der gewünschten Weise sichern. Unverzüglich nach Klebstoffauftrag und Entfernen der verbliebenen Schutzfolie der Klebstoffkörper **4** wird der Seitenwandblechsektion **2** in der gewünschten Raumanordnung die Profilsektion **3** angenähert. Unter kurzzeitig im Bereich der ersten Fügeflächen **2.1/3.1** ausgeübtem Kontaktdruck wird die Seitenwandblechsektion **2** mit der Profilsektion **3** gefügt **(Figur 1)**, wobei infolge der Eigenformbeständigkeit der Klebstoffkörper **4** im Bereich der ersten Fügeflächen **2.1/3.1.** ein definierter Fügeabstand aufrechterhalten bleibt. Durch den kontaktklebenden Klebstoffkörper **4** wird die Seitenwandsektion **2** mit der Profilsektion **3** im Bereich der ersten Fügeflächen **2.1/3.1** in einem durch die definierte Fügeschichtdicke des Klebstoffkörpers 4 vorbestimmten Fügeabstand verbunden **(Figur 3).** Bei geeigneter Auswahl der Anzahl und Größe der ersten Fügeflächen **2.1/3.1** wird dabei eine solche erste Fügefestigkeit erreicht, daß nach diesem Fügevorgang gegebenenfalls ein Entnehmen, Bewegen und möglicherweise Weiterbearbeiten der Seitenwandsektion ohne Form- und relative Lageveränderung der Seitenwandblechsektion **2** und Profilsektion **3** zueinander erfolgen kann. Die endgültige Stabilität und Dauerfestigkeit erreicht die Baugruppe nach dem Aushärten der zweiten Klebschicht im Bereich der zweiten Fügeflächen **2.2/3.3.**

Alternativ zu diesem Verfahren kann es zweckmäßig sein, die zweite Klebschicht **5** erst dann herzustellen, nachdem die Bauteile **2** und **3** bereits mit Hilfe der ersten Klebschicht **4** gefügt wurden, indem der betreffende fließfähige Klebstoff in die verbliebenen Fügeabstände hineingespritzt oder hineingesaugt wird **(Anspruch 2.).**

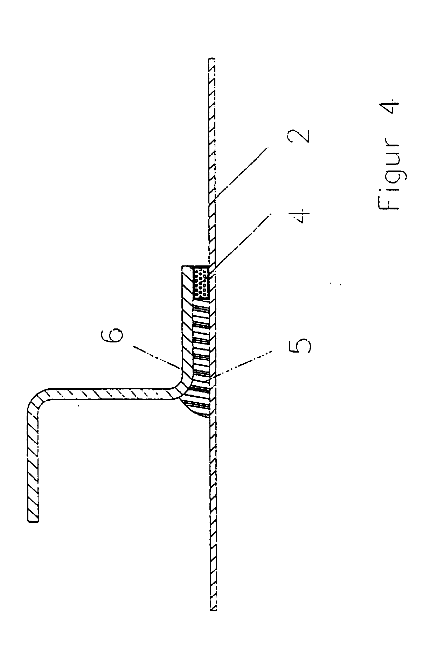

Ein weiterer Anwendungsfall für ein erfindungsgemäßes Verfahren ist das Fügen von Beulsteifen **6** mit einer Seitenwandblechsektion **2 (Figur 4)**, wobei für die zweite Klebschicht **5** anstelle des im obigen Anwendungsfall beschriebenen verlaufsträgen kalthärtenden, im ausgehärteten Zustand zähharten Zweikomponenten-Polyurethan-Klebstoffs ein verlaufsträger kalthärtender, im ausgehärteten Zustand zähelastischer Einkomponenten-Polyurethan-Klebstoff verwendet wird.

Dabei können Klebstoffkörper **4** anstelle üblicher Abdeck-Klebstreifen als Randbegrenzung für die zweite Klebschicht **5** verwendet werden, die nach dem Fügen verbleiben können und nicht aufwendig entfernt sowie als Sondermüll entsorgt werden müssen **(Anspruch 3.)**

Es wurde gefunden, daß Klebverbindungen nach einem der beschriebenen Verfahren eine höhere Schadenstoleranz als Klebverbindungen nach anderen Verfahren aufweisen, insbesondere dann, wenn die erste (schnellklebfähige) Klebschicht gegenüber der zweiten (dauerfestigkeitsgebenden) Klebschicht nach deren vollständiger Aushärtung die gleiche oder eine höhere Elastizität aufweist: In einer Fügeverbindung einmalig oder wiederholt auftretende lokale Überlastung schädigt zwar örtlich die Klebverbindung im Bereich der zweiten Klebschicht, infolge des veränderten Spannungsniveaus und -verlaufs innerhalb der erfindungsgemäß hergestellten Klebverbindung wird die Schädigung jedoch in einer der oder in beiden benachbarten ersten Klebstellen aufgefangen und pflanzt sich nicht fort. Diese Eigenschaft ist durch die Wahl des Elastizitätsverhältnisses von erstem und zweitem Klebstoff optimierbar. Segmentiert man eine Fügestelle gezielt, indem erste und zweite Fügeflächen mehrfach einander abwechselnd benachbart angeordnet werden, ist eine Klebverbindung herstellbar, bei der eine einmalig oder wiederholt auftretende lokale Überbeanspruchung allenfalls zum partiellen, nicht aber zum vollständigen Versagen der Klebverbindung führt, da die von einem Teilbereich mit zweitem Klebstoff ausgehende Rißbildung in dem oder in den benachbarten Teilbereichen mit erstem Klebstoff gestoppt wird.

Bei der Anwendung dieses Verfahrens sind wesentlich größere Fertigungstoleranzen z.B. der Profilsektion **3** zulässig und im Bereich der zweiten Fügeflächen gegenüber der Seitenwandblechsektion **2** ausgleichbar als im Fügeverfahren mittels Schweißen, ohne daß sich derartige Formabweichungen in der Außenwand der Seitenwandsektion **1** abbilden.

Zur Erreichung größerer oder zum Ausgleich unterschiedlicher Fügeabstände auch im Bereich der ersten Fügeflächen können die Klebstofformkörper für die erste Klebschicht mehrlagig aus dem genannten Klebstoffband ausgeführt werden.

Anstelle des zweiseitig kontaktklebfähigen Acrylatklebstoffkörpers ist auch die Anwendung eines anderen ersten Klebstoffmaterials, bei dem z.B. auf beiden Seiten eines eigenformbeständigen Füllstoffkerns je eine schnellklebfähige Klebschicht angeordnet ist, möglich.

Beim Ausgleich von Form- und Maßunterschieden zwischen den Bauteilen kann es zweckmäßig sein, für stark unterschiedliche Klebfugendicken und -breiten im Bereich der zweiten Fügeflächen mehr als einen Klebstoff mit unterschiedlicher Viskosität und/oder im ausgehärteten Zustand unterschiedlichen Festigkeitseigenschaften zu verwenden.

Das erfindungsgemäße Verfahren kann in bestimmten Anwendungsfällen anstelle der im Ausführungsbeispiel für die zweite Klebschicht verwendeten Polyurethanklebstoffe auch mit anderen Reaktivklebstoffen, insbesondere Epoxidharzklebstoffen, ausgeführt werden.

Die beschriebenen Verfahren sind nicht nur bei der Herstellung von Baugruppen in Differentialbauweise für einen Wagenkasten eines Schienenfahrzeugs brauchbar. Sie lassen sich z.B. gleichermaßen für das Befestigen einer Baugruppe auf oder an einer tragenden Sektion wie für die Herstellung ganzer Wagenkästen aus großformatigen Sektionen, die durch Klebverbindungen nach den beschriebenen Verfahren in flächig überlappenden oder flächig aufeinander stoßenden Bereichen gefügt werden, verwenden.

### Liste der verwendeten Bezugszeichen:

- **1**: Seitenwandsektion
- **2**: Seitenwandblechsektion
- **2.1**: Erste Fügefläche der Seitenwandblechsektion
- **2.2**: Zweite Fügefläche der Seitenwandblechsektion
- **3**: Profilsektion
- **3.1**: Erste Fügefläche der Profilsektion
- **3.2**: Zweite Fügefläche der Profilsektion
- **4**: Erste Klebschicht
- **5**: Zweite Klebschicht
- **6**: Beulsteife

## Patentansprüche

1. Verfahren zum Fügen von Baugruppen von Schienenfahrzeugen durch Kleben, bei dem ein vorgeformtes erstes Bauteil mit einem formangepaßten zweiten Bauteil mittels flächig getrennter Verwendung von Klebstoffen mit unterschiedlichen Reaktionscharakteristiken bis zum Erreichen einer Handhabungsfestigkeit gefügt wird, **gekennzeichnet dadurch, daß**
- das erste Bauteil (Seitenwandblechsektion **2**) in üblicher Weise in eine Fügestellung gebracht und in Gebrauchsform fixiert wird,
- auf ausgewählten und flächig begrenzten ersten Fügeflächen (**2.1** und/oder **3.1**) des ersten Bauteils (Seitenwandblechsektion **2**) und/oder des zweiten Bauteils (Profilsektion **3**) eine erste Klebschicht (**4**) mit der Eigenschaft, schnellklebfähig zu sein und beim Fügen eine definierte Fügeschichtdicke beizubehalten, aufgebracht wird,
- auf ausgewählten zweiten Fügeflächen (**2.2** und/oder **3.2**) des ersten Bauteils (Seitenwandblechsektion **2**) und/oder des zweiten Bauteils (Profilsektion **3**) eine zweite Klebschicht (**5**) in definierter Menge und mit der Eigenschaft, längerhärtend und beim Fügen verlaufsträge, jedoch fließ- und benetzungsfähig zu sein, aufgebracht wird,
- die beiden zu fügenden Bauteile (Seitenwandblechsektion **2**, Profilsektion **3**) in der gewünschten Raumanordnung zueinander positioniert, einander angenähert und unter im Bereich der ausgewählten ersten Fügeflächen (**2.1/3.1**) ausgeübter Fügedruckeinwirkung miteinander gefügt werden, wobei die erste Klebschicht (**4**) das erste Bauteil (Seitenwandblechsektion **2**) mit dem zweiten Bauteil (Profilsektion **3**) im Bereich der ersten Fügeflächen (**2.1/3.1**) in einem durch die definierte Fügeschichtdicke der ersten Klebschicht (**4**) vorbestimmten Fügeabstand mit einer solchen ersten Fügefestigkeit verbindet, daß nach dem Fügevorgang ein Entnehmen und Bewegen der vorgefügten Baugruppe (Seitenwandsektion **1**) ohne Form- und Lageveränderung der Bauteile zueinander möglich ist, und die zweite Klebschicht (**5**), deren Menge sowie Fließ- und Benetzungsfähigkeit derart ist, daß die aufgebrachte erste Klebschicht (**4**) das andere Bauteil (Profilsektion **3** oder Seitenwandblechsektion **2**) im Bereich der ersten Fügeflächen (**3.1** oder **2.1**) kontaktieren kann, den im Bereich der zweiten Fügeflächen (**2.2/3.2**) zwischen dem ersten und dem zweiten Bauteil (Seitenwandblechsektion **2**, Profilsektion **3**) verbliebenen Fügeabstand ausfüllt und
- anschließend die Baugruppe (Seitenwandsektion **1**) in ihrer Fügestellung verbleibt oder in eine Ruhestellung verbracht oder in den weiteren technologischen Ablauf einbezogen wird, wo eine durch das Aushärten der zweiten Klebschicht (**5**) bewirkte zweite Fügefestigkeit erreicht wird.

2. Verfahren zum Fügen von Baugruppen von Schienenfahrzeugen durch Kleben, bei dem ein vorgeformtes erstes Bauteil mit einem formangepaßten zweiten Bauteil mittels flächig getrennter Verwendung von Klebstoffen mit unterschiedlichen Reaktionseigenschaften bis zum Erreichen einer Handhabungsfestigkeit gefügt wird, **gekennzeichnet dadurch, daß**
- das erste Bauteil (Seitenwandblechsektion **2**) in üblicher Weise in eine Fügestellung gebracht und in Gebrauchsform fixiert wird,
- auf ausgewählten und flächig begrenzten ersten Fügeflächen (**2.1** und/oder **3.1**) des ersten Bauteils (Seitenwandblechsektion **2**) und/oder des zweiten Bauteils (Profilsektion **3**) eine erste Klebschicht (**4**) mit der Eigenschaft, schnellklebfähig zu sein und beim Fügen eine definierte Fügeschichtdicke beizubehalten, aufgebracht wird,
- die beiden zu fügenden Bauteile (Seitenwandblechsektion **2**, Profilsektion **3**) in der gewünschten Raumanordnung zueinander positioniert, einander angenähert und unter im Bereich der ausgewählten ersten Fügeflächen (**2.1/3.1**) ausgeübter Fügedruckeinwirkung miteinander gefügt werden, wobei die erste Klebschicht (**4**) das erste Bauteil (Seitenwandblechsektion **2**) mit dem zweiten Bauteil (Profilsektion **3**) im Bereich der ersten Fügeflächen (**2.1/3.1**) in einem durch die definierte Fügeschichtdicke der ersten Klebschicht (**4**) vorbestimmten Fügeabstand mit einer solchen ersten Fügefestigkeit verbindet, daß ein Entnehmen und Bewegen der vorgefügten Baugruppe (Seitenwandsektion **1**) ohne Form- und Lageveränderung der Bauteile zueinander möglich ist,
- im Bereich von ausgewählten zweiten Fügeflächen (**2.2/3.2**) in den zwischen dem ersten und dem zweiten Bauteil (Seitenwandblechsektion **2**, Profilsektion **3**) verbliebenen Fügeabstand eine zweite Klebschicht (**5**) in definierter Menge und erforderlicher Fließ- und Benetzungsfähigkeit eingebracht wird und
- anschließend die Baugruppe (Seitenwandsektion **1**) in ihrer Fügestellung verbleibt oder in eine Ruhestellung verbracht oder in den weiteren technologischen Ablauf einbezogen wird, wo eine durch das Aushärten der zweiten Klebschicht (**5**) bewirkte zweite Fügefestigkeit erreicht wird.

3. Verfahren nach **Anspruch 1.** oder **2., gekennzeichnet dadurch, daß** die vorgesehenen ersten Fügeflächen (**2.1/3.1**) derart ausgewählt werden, daß zumindest ein Teil der vorgesehenen zweiten Fügeflächen (**2.2/3.2**) durch Teile der ersten Klebschicht (**4**) begrenzt und ein unerwünschtes Benetzen weiterer Bauteilflächen durch den Klebstoff der zweiten Klebschicht (**5**) verhindert wird.

4. Verfahren nach **einem der Ansprüche 1.** bis **3., gekennzeichnet dadurch, daß** für die erste Klebschicht (**4**) ein kontaktklebfähiger Klebstoff verwendet wird.

5. Verfahren nach einem der **Ansprüche 1.** bis **4., gekennzeichnet dadurch, daß** für die erste Klebschicht (**4**) eigenformbeständige Klebstoffkörper verwendet werden.

6. Verfahren nach **einem der Ansprüche 1.** bis **5., gekennzeichnet dadurch, daß** für die zweite Klebschicht (**5**) ein Reaktivklebstoff verwendet wird.

7. Verfahren nach **einem der Ansprüche 1.** bis **6., gekennzeichnet dadurch, daß** für die erste Klebschicht (**4**) ein Klebstoff verwendet wird, der gegenüber dem Klebstoff für die zweite Klebschicht (**5**) nach dessen endgültigem Aushärten die gleiche oder eine größere Elastizität aufweist.

8. Verfahren nach **Anspruch 7., gekennzeichnet dadurch, daß** in einer Fügeverbindung erste und zweite Fügeflächen (**2.1/3.1, 2.2/3.2**) dergestalt mehrfach einander abwechselnd benachbart angeordnet werden, daß die Fügeverbindung eine erhöhte Sicherheit gegen Versagen erhält.

9. Verfahren nach **einem der Ansprüche 1. bis 8., gekennzeichnet dadurch, daß** durch variierte Dicke einer oder beider Klebschichten (**4, 5**) Form- und Maßunterschiede zwischen den zu fügenden Bauteilen (Seitenwandblechsektion **2**, Profilsektion **3**) ausgeglichen werden.

10. Verfahren nach **einem der Ansprüche 1. bis 9., gekennzeichnet dadurch, daß** im Bereich der zweiten Fügeflächen (**2.2/3.2**) mindestens zwei Klebstoffe mit unterschiedlicher Viskosität und/oder im ausgehärteten Zustand unterschiedlichen Eigenschaften flächig nebeneinander als zweite Klebschicht (**5**) aufgebracht werden.

## Claims

1. Method of joining subassemblies of rail vehicles by adhesion, in which a preformed first component is joined to a second component of matched shape by means of use, separately in terms of area, of adhesives with different reaction characteristics up to attainment of a handling strength, characterised in that
- the first component (side wall sheet metal section 2) is brought in usual manner into a joining position and fixed in a utility mould,
- a first adhesive layer (4) with the property of being rapidly able to adhere and maintaining a defined joint layer thickness on joining is applied to selected and areally separate first joint surfaces (2.1 and/or 3.1) of the first component (side wall sheet metal section 2) and/or of the second component (profile section 3),
- a second adhesive layer (5) in defined quantity and with the property of being long to harden and slow-to-run, but flowable and wettable, on joining, is applied to selected joint surfaces (2.2 and/or 3.2) of the first component (side wall sheet metal section 2) and/or of the second component (profile section 3),
- the two components to be joined (side wall sheet metal section 2, profile section 3) are positioned in the desired physical arrangement relative to one another, brought into proximity to one another and joined together with joining pressure action exerted in the region of the selected first joint surfaces (2.1/3.1), wherein the first adhesive layer (4) connects the first component (side wall sheet metal section 2) with the second component (profile section 3) in the region of the first joint surfaces (2.1/3.1) in a joint spacing, which is predetermined by the defined joint layer thickness of the first adhesive layer (4), with such a first joint strength that after the joining process a removal and movement of the preliminarily joined subassembly (side wall section 1) without change in shape and position of the components relative to one another is possible, and the second adhesive coating (5), the quantity as well as flowability and wettability of which is such that the applied first adhesive layer (4) can contact the other component (profile section 3 or side wall sheet metal section 2) in the region of the first joint surfaces (3.1 or 2.1), fills out the joint spacing remaining in the region of the second joint surfaces (2.2/3.2) between the first and the second component (side wall sheet metal section 2, profile section 3) and
- subsequently the subassembly (side wall section 1) is left in its joint position or brought into a rest setting or included in a further technological work cycle, where a second joint strength is achieved by the hardening of the second adhesive layer (5).

2. Method of joining subassemblies of rail vehicles by adhesion, in which a preformed first component is joined to a second component of matched shape by means of use, separately in terms of area, of adhesives with different reaction characteristics up to attainment of a handling strength, characterised in that
- the first component (side wall sheet metal section 2) is brought in usual manner into a joining position and fixed in a utility mould,
- a first adhesive layer (4) with the property of being rapidly able to adhere and maintaining a defined joint layer thickness on joining is applied to selected and areally separate first joint surfaces (2.1 and/or 3.1) of the first component (side wall sheet metal section 2) and/or of the second component (profile section 3),
- the two components to be joined (side wall sheet metal section 2, profile section 3) are positioned in the desired physical arrangement relative to one another, brought into proximity to one another and joined together with joining pressure action exerted in the region of the selected first joint surfaces (2.1/3.1), wherein the first adhesive layer (4) connects the first component (side wall sheet metal section 2) with the second component (profile section 3) in the region of the first joint surfaces (2.1/3.1) in a joint spacing, which is predetermined by the defined joint layer thickness of the first adhesive layer (4), with such a first joint strength that a removal and movement of the preliminarily joined subassembly (side wall section 1) without change in shape and position of the components relative to one another is possible,
- a second adhesive layer (5) in defined quantity and required flowability and wettability is applied in the region of selected second joint surfaces (2.2/3.2) in the joint spacing remaining between the first component and the second component (side wall sheet metal section 2, profile section 3) and
- subsequently the subassembly (side wall section 1) is left in its joint position or brought into a rest setting or included in a further technological work cycle, where a second joint strength is achieved by the hardening of the second adhesive layer (5).

3. Method according to claim 1 or 2, characterised in that the intended first joint surfaces (2.1/3.1) are selected in such a manner that at least a part of the intended second joint surfaces (2.2/3.2) are bounded by parts of the first adhesive layer (4) and an undesired wetting of further component surfaces by the adhesive of the second adhesive layer (5) is prevented.

4. Method according to one of claims 1 to 3, characterised in that an adhesive adhering on contact is used for the first adhesive layer (4).

5. Method according to one of claims 1 to 4, characterised in that inherently stable adhesive bodies are used for the first adhesive layer (4).

6. Method according to one of claims 1 to 5, characterised in that a reaction adhesive is used for the second adhesive layer (5).

7. Method according to one of claims 1 to 6, characterised in that an adhesive, which in relation to the adhesive for the second adhesive layer (5) has the same or a greater elasticity after the hardening thereof, is used for the first adhesive layer (4).

8. Method according to claim 7, characterised in that in a joint connection the first and second joint surfaces (2.1/3.1, 2.2/3.2) are arranged alternatingly adjacent one another several times in such a manner that the joint connection receives increased security against failure.

9. Method according to one of claims 1 to 8, characterised in that shape and dimensional differences between the components to be joined (side wall sheet metal section 2, profile section 3) are compensated for by varied thickness of one or both adhesive layers (4.5).

10. Method according to one of claims 1 to 9, characterised in that in the region of the joint surfaces (2.2/3.2) at least two adhesives with different viscosity and/or, in the hardened state, different properties are applied near one another in area as the second adhesive layer (5).

## Revendications

1. Procédé pour assembler un module de construction de véhicules sur rails par collage, selon lequel on réunit un premier composant préformé à un second composant de forme adaptée, moyennant l'utilisation, séparée au niveau des surfaces, de colles ayant des caractéristiques de réaction différentes, jusqu'à l'obtention d'une solidité lors de la manipulation, caractérisé en ce
- qu'on dispose de façon usuelle le premier composant (section de tôle de paroi latérale 2) dans une position d'assemblage et on le fixe dans sa position d'utilisation,
- on dépose sur des premières surfaces d'assemblage (2.1 et/ou 3.1), sélectionnées et limitées du point de vue étendue en surface, du premier composant (section de tôle de parois latérales 2) et du second composant (section profilée 3) une couche de colle (4) ayant la caractéristique d'être apte à exécuter un collage rapide et à conserver une épaisseur définie de couches lors de l'assemblage,
- on applique sur des secondes surfaces d'assemblage sélectionnées (2.1 et/ou 3.1) du premier composant (section de tôle de paroi latérale 2) et/ou du second composant (section de profilé 3) une seconde couche de colle (5) présente en une quantité définie et présentant la propriété de durcir lentement et de présenter une inertie de comportement lors de l'assemblage, tout en étant apte à s'écouler et à réaliser un mouillage,
- on positionne l'un par rapport à l'autre les deux composants à assembler (section de tôle de paroi latérale 2, section profilée 3) dans la disposition spatiale réciproque désirée, on les rapproche l'un de l'autre et on les assemble l'un à l'autre moyennant l'application d'une pression d'assemblage exercée dans la zone des premières surfaces sélectionnées d'assemblage (2.1/3.1), auquel cas la première couche de colle (4) relie le premier composant (section de tôle de paroi latérale 2) au second composant (section profilée 3) dans la zone des premières surfaces d'assemblage (2.1/3.1) à une distance d'assemblage prédéterminée par l'épaisseur définie de la première couche de colle d'assemblage (4), avec une première solidité d'assemblage telle qu'après l'opération d'assemblage, un retrait et un déplacement du module de construction préassemblé (section de paroi latérale 1) est possible sans changement de forme ni modification de la position réciproque des composants, et la seconde couche de colle (5), dont la quantité, l'aptitude à l'écoulement et la capacité de mouillage sont telles que la première couche de colle déposée (4) peut venir en contact avec l'autre composant (section profilée 3 ou section de tôle de paroi latérale 2) dans la zone des premières surfaces d'assemblage (3.1 ou 2.1), remplit l'intervalle d'assemblage qui subsiste dans la zone des secondes surfaces d'assemblage (2.2/3.2) entre les premier et second composants (section de tôle de paroi latérale 2, section profilée 3), et
- ensuite le module de construction (section de paroi latérale 1) reste dans sa position d'assemblage, ou bien on amène ce module de construction dans une position de repos ou on l'insère dans un autre cycle technologique, où il atteint une seconde solidité d'assemblage produite par le durcissement de la seconde couche de colle (5).

2. Procédé pour l'assemblage de modules de construction de véhicules sur rails par collage selon lequel on réunit un premier composant préformé à un second composant de forme adaptée, moyennant l'utilisation, séparée au niveau des surfaces, de colles ayant des caractéristiques de réaction différentes, jusqu'à l'obtention d'une solidité lors de la manipulation,
caractérisé en ce
- qu'on dispose de façon usuelle le premier composant (section de tôle de paroi latérale 2) dans une position d'assemblage et on le fixe dans sa position d'utilisation,
- qu'on dépose sur des premières surfaces d'assemblage (2.1 et/ou 3.1), sélectionnées et limitées du point de vue étendue en surface, du premier composant (section de tôle de parois latérales 2) et du second composant (section profilée 3) une couche de colle (4) ayant la caractéristique d'être apte à exécuter un collage rapide et à conserver une épaisseur définie de couches lors de l'assemblage,
- qu'on positionne l'un par rapport à l'autre les deux composants à assembler (section de tôle de paroi latérale 2, section profilée 3) dans la disposition spatiale réciproque désirée, on les rapproche l'un de l'autre et on les assemble l'un à l'autre moyennant l'application d'une pression d'assemblage exercée dans la zone des premières surfaces sélectionnées d'assemblage (2.1/3.1), auquel cas la première couche de colle (4) relie le premier composant (section de tôle de paroi latérale 2) au second composant (section profilée 3) dans la zone des premières surfaces d'assemblage (2.1/3.1) à une distance d'assemblage prédéterminée par l'épaisseur définie de la première couche de colle d'assemblage (4), avec une première solidité d'assemblage telle qu'un retrait ou un déplacement du module de construction préassemblé (section de paroi latérale 1) est possible sans changement de forme ni modification de la position réciproque des composants,
- qu'on applique dans la zone de secondes surfaces sélectionnées d'assemblage (2.1/3.2) dans l'intervalle d'assemblage qui subsiste entre les premier et second composants (section de tôle de paroi latérale 2, section profilée 3) une seconde couche de colle (5) présente en une quantité définie et présentant la fluidité requise et la capacité de mouillage requise, et
- ensuite le module de construction (section de paroi latérale 1) reste dans sa position d'assemblage, ou bien on amène ce module de construction dans une position de repos ou on l'insère dans un autre cycle technologique, où il atteint une seconde solidité d'assemblage produite par le durcissement de la seconde couche de colle (5).

3. Procédé selon la revendication 1 ou 2, caractérisé en ce qu'on choisit les premières surfaces prévues d'assemblage (2.1/3.1) de telle sorte qu'au moins une partie des secondes surfaces d'assemblage prévues (2.2/3.2) est limitée par des parties de la première couche de colle (4) et qu'un mouillage indésirable d'autres surfaces de composants par la colle de la seconde couche de colle (5) est empêché.

4. Procédé selon l'une des revendications 1 à 3, caractérisé en ce qu'on utilise une colle adhésive par contact pour la première couche de colle (4).

5. Procédé selon l'une de revendications 1 à 4, caractérisé en ce qu'on utilise un corps adhésif de forme propre pour la première couche de colle (4).

6. Procédé selon l'une des revendications 1 à 5, caractérisé en ce qu'on utilise une colle réactive pour la seconde couche de colle (5).

7. Procédé selon l'une des revendications 1 à 6, caractérisé en ce qu'on utilise pour la première couche de colle (4) un adhésif, qui possède la même élasticité ou une élasticité supérieure à celle de la colle pour la seconde couche (5) après le durcissement final de cette dernière.

8. Procédé selon la revendication 7, caractérisé en ce qu'on dispose dans une liaison d'assemblage, des premières et secondes surfaces d'assemblages (2.1/3.1,2.2/3.2) d'une manière multiple et au voisinage les unes des autres selon une disposition alternée entre elles de sorte que la liaison d'assemblage présente une sécurité accrue vis-à-vis d'une défaillance.

9. Procédé selon l'une des revendications 1 à 8, caractérisé en ce que des différences de formes et de cotes entre les composants assemblés (section de tôle de paroi latérale 2, section profilée 3) sont compensées grâce à une épaisseur variable d'une ou des deux couches de colle (4,5).

10. Procédé selon l'une des revendications 1 à 9, caractérisé en ce qu'on applique successivement, à plat, en tant que seconde couche de colle (5), dans la zone des secondes surfaces d'assemblage (2.2/3.2), au moins deux colles possédant des viscosités différentes et/ou des caractéristiques différentes à l'état durci.
